# EUROPÄISCHE PATENTSCHRIFT

(11) **EP 3 791 093 B1**
(45) Veröffentlichungstag und Bekanntmachung des Hinweises auf die Patenterteilung: **08.06.2022**
(21) Anmeldenummer: 19725650.6
(22) Anmeldetag: 30.04.2019
(51) Int. Cl.: F16H 61/00, F16H 3/54, B60K 1/00

(54) **MEHRGANG-PLANETENGETRIEBE FÜR EIN FAHRZEUG MIT MINDESTENS EINER E-MASCHINE**
MULTI-SPEED PLANETARY TRANSMISSION FOR A VEHICLE WITH AT LEAST ONE ELECTRIC MACHINE
ENGRENAGE PLANÉTAIRE À PLUSIEURS VITESSES POUR UN VÉHICULE POURVU D'AU MOINS UN MOTEUR ÉLECTRIQUE

(30) Priorität: 08.05.2018 DE 102018207110
(43) Veröffentlichungstag der Anmeldung: 17.03.2021
(73) Patentinhaber: Robert Bosch GmbH, 70442 Stuttgart (DE)
(72) Erfinder: KRASTEV, Ianislav, 71638 Ludwigsburg (DE); MOHAMED, Wael, 71282 Hemmingen (DE); SCHLITTENBAUER, Tobias, 71679 Asperg (DE)
(86) Internationale Anmeldenummer: PCT/EP2019/061036
(87) Internationale Veröffentlichungsnummer: WO 2019/214995

(56) Entgegenhaltungen:
- DE-A1-102010 001 259
- DE-A1-102012 216 132
- US-A1- 2012 100 953

## Beschreibung

### Technisches Gebiet

Die Erfindung bezieht sich auf ein Mehrgang-Planetengetriebe für ein Fahrzeug mit mindestens einer E-Maschine und einer Antriebswelle mit einem Sonnenrad und einer Abtriebswelle mit einem Planetenrad. Ferner bezieht sich die Erfindung auf die Verwendung des Mehrgang-Planetengetriebes integriert in eine Fahrzeugachse eines mindestens eine E-Maschine aufweisenden Fahrzeugs.

### Stand der Technik

US 2015/0226297 A1 bezieht sich auf eine E-Achse am elektrischen Antrieb eines Fahrzeugs. Es wird eine elektrische Achse für ein elektrisch angetriebenes Fahrzeug offenbart, welches eine elektrische Maschine und zwei Vorgelegegetriebe zum Antrieb der Räder der Achse aufweist. Stromab der elektrischen Maschine ist ein schaltbares Getriebe angeordnet, welches als Planetengetriebe ausgeführt ist mit einem Freilauf und mit einem Differential. Die elektrische Achse weist einen Verschiebemechanismus auf zur Schaltung zweier Gänge. In einem ersten Gang sind ein Ringrad des Getriebes und ein Kupplungskörper, der am Gehäuse ausgebildet ist, miteinander verbunden und eine Kupplung zwischen dem Ringrad und dem Planetenträger des Getriebes steht geöffnet. In einem zweiten Gang sind das Ringrad und der Kupplungskörper nicht verbunden, wohingegen die Kupplung geschlossen ist. Die Schaltung gemäß US 2015/0226297 A1 ist relativ aufwendig.

Die DE 10 2010 001 259 A1, US 2012/100953 A1 und die DE 10 2012 216 132 A1 offenbaren jeweils ein Mehrgang-Planetengetriebe, welches nach Auffassung der Prüfungsabteilung des europäischen Patentamts unter den Wortlaut des Oberbegriffs des Anspruchs 1 fällt.

### Darstellung der Erfindung

Erfindungsgemäß wird ein Mehrgang-Planetengetriebe für ein Fahrzeug mit mindestens einer E-Maschine vorgeschlagen, wobei das Mehrgang-Planetengetriebe eine Antriebswelle mit einem Sonnenrad und einem Hohlrad und eine Abtriebswelle mit einem Planetenradträger mit mindestens einem Planetenrad aufweist. Die Antriebswelle und die Abtriebswelle sind mittels einer Kupplung miteinander verbindbar oder voneinander trennbar. Das Mehrgang-Planetengetriebe weist einen Freilauf auf, über den eine Schaltung unter Last zwischen einer ersten Übersetzung i_1 und einer zweiten Übersetzung i_2 mittels einer Kupplung erfolgen kann. Das erfindungsgemäß vorgeschlagene Mehrgang-Planetengetriebe benötigt zur Verwirklichung einer Lastschaltung zwischen zwei Gängen lediglich eine Kupplung. Wie bei bereits bekannten Lösungen werden bei dem erfindungsgemäß vorgeschlagenen Mehrgang-Planetengetriebe nicht eine Kupplung und eine Rastvorrichtung geschaltet, um den Gang zu wechseln, sondern aufgrund des Freilaufes ist die Betätigung einer einzigen Kupplung ausreichend. Dies reduziert den Aufwand für die Schaltungsfunktion, was zu einer Gewichtsreduktion des erfindungsgemäß vorgeschlagenen Mehrgang-Planetengetriebes sowie zu einer Vereinfachung der Komplexität und einer Kosteneinsparung durch die Verwendung des Freilaufs führt.

Erfindungsgemäß ist dem Freilauf eine beispielsweise als Klauenkupplung beschaffene Rastvorrichung zugeordnet, die imstande ist, den Freilauf zu blockieren. Insbesondere wird der Freilauf bei Realisierung des ersten Ganges mit einem ersten Übersetzungsverhältnis i_1 gegen ein Gehäuse des Mehrgang-Planetengetriebes blockiert, wobei die Kupplung offensteht. Die erste Übersetzung i_1 ist gegeben durch die Beziehung i_1 = 1 - (z_H/z_S), wobei z_H die Zähnezahl des Hohlrades und z_S die Zähnezahl des Sonnenrades bezeichnet.

Soll in den zweiten Gang des erfindungsgemäß vorgeschlagenen Mehrgang-Planetengetriebes geschaltet werden mit einer zweiten Übersetzung i_2, so ist die Kupplung geschlossen und der Freilauf freigegeben. Die zweite Übersetzung ist gegeben durch i_2 = 1, was bedeutet, dass alle Zentralräder, also Hohlrad, Sonnenrad und Planetenradträger sich gleich schnell drehen und keine Drehzahldifferenz auftritt.

Neben dem ersten Gang und dem zweiten Gang kann das erfindungsgemäß vorgeschlagene Mehrgang-Planetengetriebe auch in einen Rückwärtsgang geschaltet werden. Dazu kann beispielsweise bei einem Fahrzeug mit einer E-Maschine diese rückwärts angetrieben werden, wobei die Kupplung offensteht und der Freilauf durch eine diesem zugeordnete Rastvorrichtung gesperrt ist.

Darüber hinaus kann das erfindungsgemäß vorgeschlagene Mehrgang-Planetengetriebe auch in eine Parksperrenfunktion geschaltet werden. Dazu wird die Kupplung geschlossen, ferner wird der Freilauf durch eine Rastvorrichtung gesperrt.

In weiterer Ausgestaltung des erfindungsgemäß vorgeschlagenen Mehrgang-Planetengetriebes umfasst die Kupplung einen ersten Kupplungsteil und einen zweiten Kupplungsteil. In einer ersten Ausführungsvariante ist das erste Kupplungsteil auf der Antriebswelle aufgenommen, wohingegen das zweite Kupplungsteil an einer Stegwelle des Planetenrades aufgenommen ist. In einer zweiten Ausführungsvariante der Kupplung ist das erste Kupplungsteil ebenfalls auf der Antriebswelle aufgenommen, wohingegen das zweite Kupplungsteil auf der Abtriebswelle aufgenommen ist.

Bei einem Fahrzeug mit dem erfindungsgemäß vorgeschlagenen Mehrgang-Planetengetriebe kann das Mehrgang-Planetengetriebe in achsparalleler Anordnung in Bezug auf eine Fahrzeugachse des Fahrzeugs angeordnet werden. Bei einem Fahrzeug mit dem erfindungsgemäß vorgeschlagenen Mehrgang-Planetengetriebe kann über ein oder mehrere Stirnradstufen ein Differentialgetriebe angetrieben werden. In einer weiteren Ausgestaltungsmöglichkeit kann das Mehrgang-Planetengetriebe in die Fahrzeugachse des Fahrzeugs integriert sein und Kegelräder eines direkt angetriebenen Differentialgetriebes antreiben.

Die Erfindung bezieht sich des Weiteren auf die Verwendung des Mehrgang-Planetengetriebes an einer Fahrzeugachse eines mindestens eine E-Maschine aufweisenden Fahrzeugs.

### Vorteile der Erfindung

Das erfindungsgemäß vorgeschlagene Mehrgang-Planetengetriebe zeichnet sich durch eine relativ einfache Schaltbarkeit auf, mit welcher sowohl ein erstes Übersetzungsverhältnis als auch ein zweites Übersetzungsverhältnis abtriebsseitig realisiert werden kann. Des Weiteren kann durch das erfindungsgemäß vorgeschlagene einfach unter Last zu schaltende Mehrgang-Planetengetriebe ein Rückwärtsgang realisiert werden, ebenso eine Parksperrenfunktion. Das erfindungsgemäß vorgeschlagene Mehrgang-Planetengetriebe zeichnet sich des Weiteren durch eine Gewichtsreduktion aus, ferner ist durch den Einsatz des Freilaufes die Komplexität wesentlich vereinfacht und es lässt sich eine Kosteneinsparung erzielen. Dadurch, dass dem Freilauf eine Sperre zugeordnet ist, kann dieser gegenüber dem Gehäuse arretiert werden, was eine Rückwärtsfahrt durch eine Rückwärtsrotation der mindestens einen elektrischen Maschine ermöglicht. Die mindestens eine elektrische Maschine in zwei Richtungen rotieren zu lassen, stellt ebenfalls keinen großen Aufwand dar.

Das erfindungsgemäß vorgeschlagene Mehrgang-Planetengetriebe weist in seiner Ausgestaltung als Planetengetriebe die höchste Leistungsdichte aller Getriebe auf, ist lastschaltbar, ohne dass eine Zugkraftunterbrechung auftritt und so ein Freilauf und eine kraftschlüssige Lamellenkupplung in vorteilhafter Weise eingesetzt werden können. Insbesondere ist hervorzuheben, dass der Freilauf sehr einfach regelbar ist.

### Kurze Beschreibung der Zeichnung

Anhand der Zeichnung wird die Erfindung nachstehend eingehender beschrieben.

Es zeigt:
- Figur 1: das zwischen An- und Abtriebswelle aufgenommene Mehrgang-Planetengetriebe in schematischer Darstellung
- Figur 2.1 und 2.2: Ausgestaltungsmöglichkeiten der Kupplung
- Figur 3: dem erfindungsgemäß vorgeschlagene Mehrgang-Planetengetriebe zugeordnete Stirnradstufen zum Antrieb eines Differentialgetriebes und
- Figur 4: die Anordnung des Mehrgang-Planetengetriebes in eine Fahrzeugachse integriert.

### Ausführungsvarianten

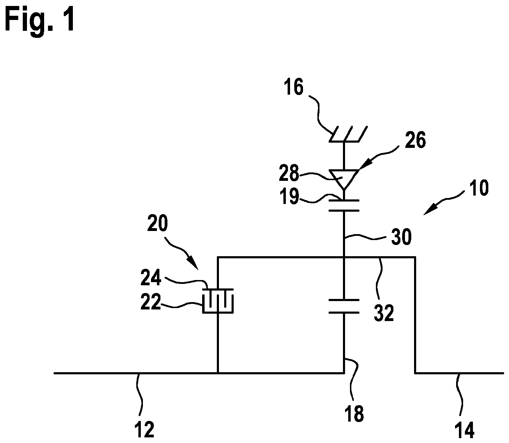

Der Darstellung gemäß Figur 1 zeigt ein Mehrgang-Planetengetriebe 10, welches zwischen einer Antriebswelle 12 und einer Abtriebswelle 14 aufgenommen ist.

Das Mehrgang-Planetengetriebe 10 ist in einem Gehäuse 16 aufgenommen. Auf der Antriebswelle 12 befindet sich ein Sonnenrad 18 sowie ein erster Kupplungsteil 22 einer Kupplung 20. Das Sonnenrad 18 kämmt mit mindestens einem Planetenrad 30, welches eine Stegwelle 32 umfasst und in einem Hohlrad 19 umläuft. Die Stegwelle 32 ist einerseits mit der Abtriebswelle 14 verbunden und weist andererseits ein zweites Kupplungsteil 24 der Kupplung 20 auf. Das mindestens eine Planetenrad 30 kämmt mit einem Freilauf 26, dem eine beispielsweise als Klauenkupplung beschaffene Rastvorrichtung 28 zugeordnet ist. Das mindestens eine Planetenrad 30 kann als einfaches, doppeltes oder gestuftes Planetenrad ausgeführt sein.

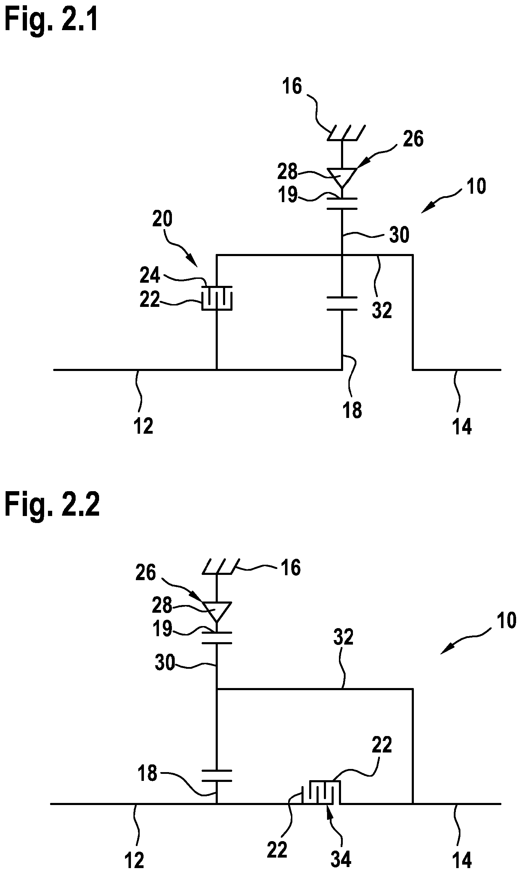

In den Darstellungen gemäß der Figuren 2.1 und 2.2 sind Ausführungsvarianten des erfindungsgemäß vorgeschlagenen Mehrgang-Planetengetriebes 10 dargestellt.

Aus der Darstellung gemäß Figur 2.1 geht hervor, dass die Kupplung 20 das erste Kupplungsteil 22 umfasst, welches an der Antriebswelle 12 aufgenommen ist. Das erste Kupplungsteil 22 der Kupplung 20 wirkt mit dem zweiten Kupplungsteil 24 zusammen, welches in der Ausführungsvariante gemäß Figur 2.1 analog zur Darstellung in Figur 1 an der Stegwelle 32 des mindestens einen Planetenrades 30 befindet. Das auf der Antriebswelle 12 aufgenommene Sonnenrad 18 kämmt mit dem mindestens einen Planetenrad 30, dem der Freilauf 26 zugeordnet ist, welcher mit der Rastvorrichtung 28 gegen das Gehäuse 16 blockiert werden kann.

In der in Figur 2.2 dargestellten Ausführungsvariante des erfindungsgemäß vorgeschlagenen Mehrgang-Planetengetriebes 10 ist eine wellenseitige Kupplung 34 ausgebildet. In der in Figur 2.2 dargestellten Ausführungsvariante befindet sich das erste Kupplungsteil 22 am Wellenende der Antriebswelle 12. Das zweite Kupplungsteil 24 hingegen ist am Wellenende der Abtriebswelle 14 aufgenommen. Das auf der Antriebswelle 12 aufgenommene Sonnenrad 18 kämmt in der Ausführungsvariante des Mehrgang-Planetengetriebes 10 nach Figur 2.2 mit dem mindestens einen Planetenrad 30, dem analog zu den vorstehenden Ausführungsvarianten der Freilauf 26 zugeordnet ist, der mittels der Rastvorrichtung 28 gegen das Gehäuse 16 blockierbar ist. Die an dem mindestens einen Planetenrad 30 aufgenommene Stegwelle 32 ist mit der Abtriebswelle 14 verbunden. Die Funktionsweise des in den Figuren 1, 2.1 und 2.2 dargestellten erfindungsgemäßen Mehrgang-Planetengetriebes stellt sich wie folgt dar:
Ein erster Gang in einer Übersetzung i_1 = 1 - (z_H/z_S) lässt sich dadurch realisieren, dass die Kupplung 20 geöffnet ist und der Freilauf 26 durch die Rastvorrichtung 28 gegen das Gehäuse 16 des Mehrgang-Planetengetriebes 10 blockiert ist. z_H bezeichnet die Zähnezahl des Hohlrades 19, z_S die Zähnezahl des Sonnenrades 18 des Mehrgang-Planetengetriebes.

Ein zweiter Gang mit einer Übersetzung i_2 = 1 wird dadurch realisiert, dass die Kupplung 20 geschlossen wird und der Freilauf 26 freigegeben ist. In diesem Falle rotieren alle Zentralräder des Mehrgang-Planetengetriebes 10 gleich schnell, ohne dass eine Drehzahldifferenz auftritt.

Das erfindungsgemäß vorgeschlagene, unter Last schaltbare Mehrgang-Planetengetriebe 10, kann darüber hinaus auch im Rückwärtsgang betrieben werden. Dazu dreht beispielsweise bei einem Fahrzeug mit mindestens einer E-Maschine 40 diese rückwärts, die Kupplung 20 steht geöffnet und der Freilauf 26 wird durch die Aktivierung der Rastvorrichtung 28 gegen das Gehäuse 16 blockiert. Aufgrund der rückwärtsrotierenden mindestens einen E-Maschine 40 lässt sich in dieser Schaltstellung der Komponenten ein Rückwärtsgang realisieren, wobei ein Übersetzungsverhältnis i_R = 1 - (z_H/z_S) realisiert ist, analog zum ersten Gang in Vorwärtsrichtung.

Dies entspricht der Übersetzung i_1 im ersten Gang jedoch als Rückwärtsgang aufgrund der entgegengesetzt rotierenden mindestens einen E-Maschine 40.

Darüber hinaus kann durch das erfindungsgemäß vorgeschlagene Mehrgang-Planetengetriebe 10 eine Parksperrenfunktion dadurch realisiert werden, dass die Kupplung 20 geschlossen steht und dass der Freilauf 26 über die Rastvorrichtung 28 blockiert ist. In diesem Falle ist das Getriebe blockiert, eine Rotation von Antriebswelle 12 und Abtriebswelle 14 ist nicht möglich, da gehemmt.

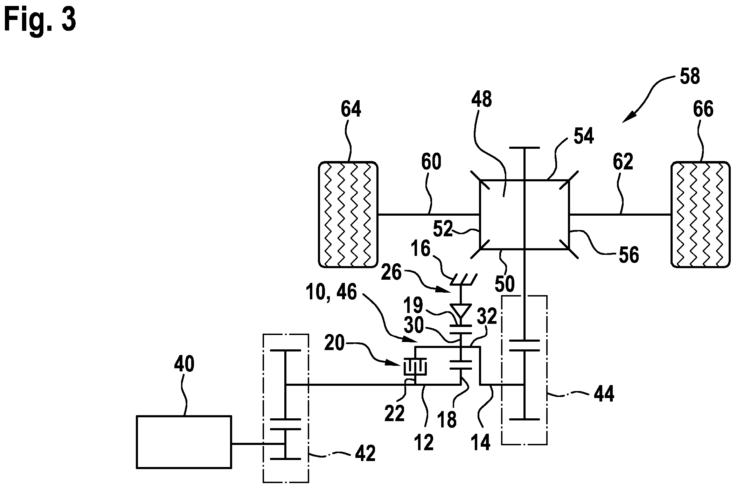

Der Darstellung gemäß Figur 3 ist zu entnehmen, dass das Mehrgang-Planetengetriebe 10 in einer achsparallelen Anordnung 46 in Bezug auf eine Fahrzeugachse 58 angeordnet ist. Über die mindestens eine E-Maschine 40 wird eine erste Stirnradstufe 42 angetrieben, welche ihrerseits die Antriebswelle 12 des Mehrgang-Planetengetriebes 10 antreibt. Auf dieser sind das erste Kupplungsteil 22 sowie das Sonnenrad 18 angeordnet. Das Sonnenrad 18 kämmt mit dem mindestens einen Planetenrad 30, dem der Freilauf 26 zugeordnet ist, der über die Rastvorrichtung 28 gegen das Gehäuse 16 des Mehrgang-Planetengetriebes 10 blockiert werden kann. Das mindestens eine Planetenrad 30 weist eine Stegwelle 32 auf, die einerseits mit der Abtriebswelle 14 des Mehrgang-Planetengetriebes 10 verbunden ist und andererseits das zweite Kupplungsteil 24 der Kupplung 20 aufnimmt. Die Abtriebswelle 14 ist über eine weitere zweite Stirnradstufe 44 mit einem Differentialgetriebe 48 verbunden. Dieses weist ein erstes Kegelrad 50, ein zweites Kegelrad 52, ein drittes Kegelrad 54 sowie ein viertes Kegelrad 56 auf. Über das Differentialgetriebe 48 wiederum werden ein erster Achsteil 60 und ein zweiter Achsteil 62 der Fahrzeugachse 58 angetrieben, an der sich das erste Rad 64 bzw. das zweite Rad 66 befindet.

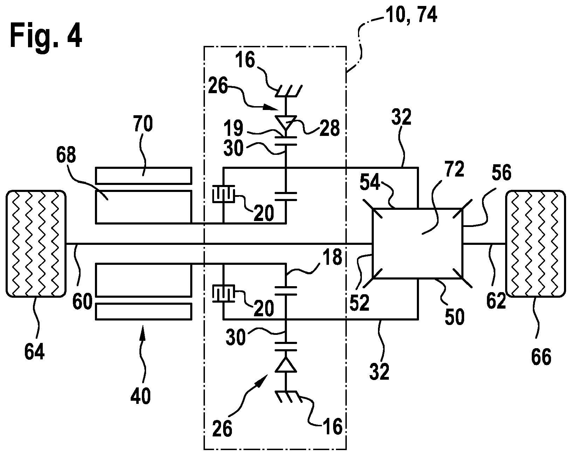

Figur 4 zeigt eine Integration des erfindungsgemäß vorgeschlagenen lastschaltbaren Mehrgang-Planetengetriebes 10 in eine Fahrzeugachse 58 integriert. Wie aus Figur 4 hervorgeht, befindet sich die E-Maschine 40 koaxial zur Fahrzeugachse 58. Die E-Maschine 40 umfasst einen Stator 70 sowie einen Rotor 68. Der Rotor 68 ist mit der Antriebswelle 12 des Mehrgang-Planetengetriebes 10 verbunden. Dieses befindet sich in Koaxialanordnung 74 zu dem ersten und zweiten Achsteil 60 bzw. 62 der Fahrzeugachse 58. Das in Figur 4 gestrichelt angedeutete Mehrgang-Planetengetriebe 10 ist analog zu den in den Figuren 1, 2.1 und 2.2 dargestellten Mehrgang-Planetengetrieben 10 aufgebaut. Wie aus der Darstellung gemäß Figur 4 hervorgeht, umfasst das Mehrgang-Planetengetriebe 10 zwei Planetenräder 30, die mit dem Sonnenrad 18, das auf der Antriebswelle 12 aufgenommen ist, kämmen. Einem jeden der in Figur 4 dargestellten Planetenräder 30 des Mehrgang-Planetengetriebes 10 ist jeweils ein Freilauf 26 zugeordnet, der jeweils über eine separate Rastvorrichtung 28 gegen das Gehäuse 16 des Mehrgang-Planetengetriebes 10 blockiert werden kann. In der Darstellung des Mehrgang-Planetengetriebes 10 gemäß Figur 4 sind die Kupplungen 20 derart ausgebildet, dass sich die ersten Kupplungsteile 22 am Umfang der Antriebswelle 12 befinden, vergleiche auch Darstellung des Mehrgang-Planetengetriebes gemäß Figur 2.1.

Figur 4 zeigt, dass in dieser Ausführungsvariante die Stegwellen 32 der Planetenräder 30 als Direktantrieb für ein direkt angetriebenes Differentialgetriebe 72 wirken. In der in Figur 4 dargestellten Ausführungsvariante fallen die Stegwelle 32 und die Abtriebswelle 14, wie sie in den Figuren 1, 2.1 und 2.2 am Mehrgang-Planetengetriebe 10 dargestellt ist, als ein Bauteil zusammen. Über das direkt angetriebene Differentialgetriebe 72, wie es in Figur 4 dargestellt ist, werden jeweils der erste Achsteil 60 und somit das erste Rad 64 sowie über den zweiten Achsteil 62 das zweite Rad 66 angetrieben. Aus der in Figur 4 dargestellten Anordnung ergibt sich, dass die E-Maschine 40, das Mehrgang-Planetengetriebe 10 sowie das direkt angetriebene Differentialgetriebe 72 eine Baugruppe darstellen, eine sogenannte E-Achse.

Der Vollständigkeit halber sei erwähnt, dass das direkt angetriebene Differentialgetriebe 72 analog zum in Figur 3 dargestellten Differentialgetriebe, das über die Stirnradstufen42, 44 angetrieben wird, das erste Kegelrad 50, das zweite Kegelrad 52 sowie das dritte Kegelrad 54 und das vierte Kegelrad 56 umfasst. Abtriebsseitig werden durch das direkt angetriebene Differentialgetriebe 72 über das zweite Kegelrad 52 der erste Achsteil 60 und über das vierte Kegelrad 56 der zweite Achsteil 62 angetrieben.

Das vorstehend beschriebene Mehrgang-Planetengetriebe 10 ist zwar als Minusgetriebe dargestellt, kann aber alle Formen einfacher Planetengetriebe gemäß VDI 2157 2012-10, so zum Beispiel Plusgetriebe, Minusgetriebe oder Minusgetriebe mit Stufenplaneten.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Mehrgang-Planetengetriebe (10) für ein Fahrzeug mit mindestens einer E-Maschine mit einer Antriebswelle (12) mit einem Sonnenrad (18) und einem Hohlrad (19) und einer Abtriebswelle (14) mit einem Planetenträger, der mindestens ein Planetenrad (30) umfasst, wobei die Antriebswelle (12) und die Abtriebswelle (14) mittels einer Kupplung (20) miteinander verbindbar und voneinander trennbar sind, wobei das Mehrgang-Planetengetriebe (10) einen Freilauf (26) aufweist, über den eine Schaltung unter Last zwischen einer ersten Übersetzung i_1 und einer zweiten Übersetzung i_2 mittels der Kupplung (20) erfolgen kann, **dadurch gekennzeichnet, dass** dem Freilauf (26) eine Rastvorrichtung (28) zugeordnet ist, die den Freilauf (26) blockiert.

2. Mehrgang-Planetengetriebe (10) gemäß Anspruch 1, **dadurch gekennzeichnet, dass** bei der ersten Übersetzung i_1 die Kupplung (20) geöffnet und der Freilauf (26) gegen ein Gehäuse (16) des Mehrgang-Planetengetriebes (10) blockiert ist.

3. Mehrgang-Planetengetriebe (10) gemäß Anspruch 1, **dadurch gekennzeichnet, dass** bei der zweiten Übersetzung i_2 die Kupplung (20) geschlossen ist und der Freilauf (26) freigegeben ist.

4. Fahrzeug mit einem Mehrgang-Planetengetriebe (10) gemäß Anspruch 1, **dadurch gekennzeichnet, dass** ein Rückwärtsgang durch die in rückwärtige Richtung angetriebene E-Maschine (40) des Fahrzeugs dargestellt ist, wobei dazu die Kupplung (20) offensteht und der Freilauf (26) durch die Rastvorrichtung (28) gesperrt ist.

5. Mehrgang-Planetengetriebe (10) gemäß Anspruch 1, **dadurch gekennzeichnet, dass** eine Parksperrenfunktion durch eine geschlossene Kupplung (20) und eine durch die Rastvorrichtung (28) gesperrten Freilauf (26) verwirklicht ist.

6. Mehrgang-Planetengetriebe (10) gemäß Anspruch 1, **dadurch gekennzeichnet, dass** die Kupplung (20) ein erstes Kupplungsteil (22) und ein zweites Kupplungsteil (24) aufweist.

7. Mehrgang-Planetengetriebe (10) gemäß Anspruch 6, **dadurch gekennzeichnet, dass** das erste Kupplungsteil (22) auf der Antriebswelle (12) und das zweite Kupplungsteil (24) an einer Stegwelle (32) des Planetenrades (30) aufgenommen ist.

8. Mehrgang-Planetengetriebe (10) gemäß Anspruch 6, **dadurch gekennzeichnet, dass** das erste Kupplungsteil (22) auf der Antriebswelle (12) und das zweite Kupplungsteil (24) auf der Abtriebswelle (14) aufgenommen ist.

9. Fahrzeug mit einem Mehrgang-Planetengetriebe (10) gemäß Anspruch 1, **dadurch gekennzeichnet, dass** das Mehrgang-Planetengetriebe (10) in achsparalleler Anordnung (46) in Bezug auf eine Fahrzeugachse (58) angeordnet ist.

10. Fahrzeug mit einem Mehrgang-Planetengetriebe (10) gemäß Anspruch 9, **dadurch gekennzeichnet, dass** das Mehrgang-Planetengetriebe (10) über ein oder mehrere Stirnradstufen (42, 44) ein Differentialgetriebe (48) antreibt.

11. Fahrzeug mit einem Mehrgang-Planetengetriebe (10) gemäß Anspruch 1, **dadurch gekennzeichnet, dass** das Mehrgang-Planetengetriebe (10) in eine Fahrzeugachse (58) des Fahrzeugs integriert ist und Kegelräder (50, 54) eines direkt angetriebenen Differentialgetriebes (72) antreibt.

12. Verwendung des Mehrgang-Planetengetriebes (10) gemäß einem der Ansprüche 1 bis 8 an einer Fahrzeugachse (58) eines mindestens eine E-Maschine (40) aufweisenden Fahrzeugs.

## Claims

1. Multiple-gear planetary transmission (10) for a vehicle with at least one electric machine with a drive shaft (12), with a sun gear (18) and an internal gear (19), and an output shaft (14) with a planetary carrier which comprises at least one planetary gear (30), it being possible for the drive shaft (12) and the output shaft (14) to be connected to one another and to be disconnected from one another by means of a clutch (20), the multiple-gear planetary transmission (10) having a freewheel (26), via which a power-shift between a first transmission ratio i_1 and a second transmission ratio i_2 can take place by means of the clutch (20), **characterized in that** the freewheel (26) is assigned a latching device (28) which blocks the freewheel (26).

2. Multiple-gear planetary transmission (10) according to Claim 1, **characterized in that**, in the case of the first transmission ratio i 1, the clutch (20) is open and the freewheel (26) is blocked against a housing (16) of the multiple-gear planetary transmission (10).

3. Multiple-gear planetary transmission (10) according to Claim 1, **characterized in that**, in the case of the second transmission ratio i_2, the clutch (20) is closed and the freewheel (26) is released.

4. Vehicle with a multiple-gear planetary transmission (10) according to Claim 1, **characterized in that** a reverse gear is produced by way of the electric machine (40) of the vehicle, which electric machine (40) is driven in a backward direction, the clutch (20) being open to this end and the freewheel (26) being locked by way of the latching device (28).

5. Multiple-gear planetary transmission (10) according to Claim 1, **characterized in that** a parking lock function is implemented by way of a closed clutch (20) and a freewheel (26) which is locked by way of the latching device (28).

6. Multiple-gear planetary transmission (10) according to Claim 1, **characterized in that** the clutch (20) has a first clutch part (22) and a second clutch part (24).

7. Multiple-gear planetary transmission (10) according to Claim 6, **characterized in that** the first clutch part (22) is received on the drive shaft (12), and the second clutch part (24) is received on a spider shaft (32) of the planetary gear (30).

8. Multiple-gear planetary transmission (10) according to Claim 6, **characterized in that** the first clutch part (22) is received on the drive shaft (12), and the second clutch part (24) is received on the output shaft (14).

9. Vehicle with a multiple-gear planetary transmission (10) according to Claim 1, **characterized in that** the multiple-gear planetary transmission (10) is arranged in an axially parallel arrangement (46) in relation to a vehicle axle (58).

10. Vehicle with a multiple-gear planetary transmission (10) according to Claim 9, **characterized in that** the multiple-gear planetary transmission (10) drives a differential gear (48) via one or more spur gear stages (42, 44).

11. Vehicle with a multiple-gear planetary transmission (10) according to Claim 1, **characterized in that** the multiple-gear planetary transmission (10) is integrated into a vehicle axle (58) of the vehicle and drives bevel gears (50, 54) of a directly driven differential gear (72) .

12. Use of the multiple-gear planetary transmission (10) according to one of Claims 1 to 8 on a vehicle axle (58) of a vehicle which has at least one electric machine (40) .

## Revendications

1. Engrenage planétaire à plusieurs vitesses (10) pour un véhicule pourvu d'au moins un moteur électrique pourvu d'un arbre primaire (12) pourvu d'une roue solaire (18) et d'une couronne (19) et d'un arbre secondaire (14) pourvu d'un porte-satellites, qui comprend au moins un satellite (30), l'arbre primaire (12) et l'arbre secondaire (14) pouvant être reliés l'un à l'autre et séparés l'un de l'autre au moyen d'un embrayage (20), l'engrenage planétaire à plusieurs vitesses (10) présentant une roue libre (26), par l'intermédiaire de laquelle un changement de vitesse sous charge entre un premier rapport de transmission i_1 et un deuxième rapport de transmission i_2 peut être effectué au moyen de l'embrayage (20), **caractérisé en ce qu'**un dispositif d'encliquetage (28) qui bloque la roue libre (26) est associé à la roue libre (26).

2. Engrenage planétaire à plusieurs vitesses (10) selon la revendication 1, **caractérisé en ce qu'**au premier rapport de transmission i_1, l'embrayage (20) est ouvert et la roue libre (26) est bloquée contre un carter (16) de l'engrenage planétaire à plusieurs vitesses (10).

3. Engrenage planétaire à plusieurs vitesses (10) selon la revendication 1, **caractérisé en ce qu'**au deuxième rapport de transmission i_2, l'embrayage (20) est fermé et la roue libre (26) est libérée.

4. Véhicule pourvu d'un engrenage planétaire à plusieurs vitesses (10) selon la revendication 1, **caractérisé en ce qu'**une marche arrière est représentée par le moteur électrique (40) du véhicule entraîné dans la direction arrière, l'embrayage (20) étant pour cela ouvert et la roue libre (26) étant arrêtée par le dispositif d'encliquetage (28).

5. Engrenage planétaire à plusieurs vitesses (10) selon la revendication 1, **caractérisé en ce qu'**une fonction d'arrêt de stationnement est réalisée par un embrayage fermé (20) et une roue libre (26) arrêtée par le dispositif d'encliquetage (28).

6. Engrenage planétaire à plusieurs vitesses (10) selon la revendication 1, **caractérisé en ce que** l'embrayage (20) comprend une première partie d'embrayage (22) et une deuxième partie d'embrayage (24) .

7. Engrenage planétaire à plusieurs vitesses (10) selon la revendication 6, **caractérisé en ce que** la première partie d'embrayage (22) est reçue sur l'arbre primaire (12) et la deuxième partie d'embrayage (24) est reçue sur un arbre d'âme (32) du satellite (30).

8. Engrenage planétaire à plusieurs vitesses (10) selon la revendication 6, **caractérisé en ce que** la première partie d'embrayage (22) est reçue sur l'arbre primaire (12) et la deuxième partie d'embrayage (24) est reçue sur l'arbre secondaire (14).

9. Véhicule pourvu d'un engrenage planétaire à plusieurs vitesses (10) selon la revendication 1, **caractérisé en ce que** l'engrenage planétaire à plusieurs vitesses (10) est agencé selon un agencement axialement parallèle (46) par rapport à un essieu de véhicule (58).

10. Véhicule pourvu d'un engrenage planétaire à plusieurs vitesses (10) selon la revendication 9, **caractérisé en ce que** l'engrenage planétaire à plusieurs vitesses (10) entraîne un différentiel (48) par l'intermédiaire d'un ou plusieurs étages de roue cylindrique (42, 44).

11. Véhicule pourvu d'un engrenage planétaire à plusieurs vitesses (10) selon la revendication 1, **caractérisé en ce que** l'engrenage planétaire à plusieurs vitesses (10) est intégré dans un essieu de véhicule (58) du véhicule et entraîne des roues coniques (50, 54) d'un différentiel à entraînement direct (72).

12. Utilisation de l'engrenage planétaire à plusieurs vitesses (10) selon l'une quelconque des revendications 1 à 8 sur un essieu de véhicule (58) d'un véhicule comprenant au moins un moteur électrique (40).
